# EUROPÄISCHE PATENTSCHRIFT

(11) **EP 2 510 571 B1**
(45) Veröffentlichungstag und Bekanntmachung des Hinweises auf die Patenterteilung: **02.10.2013**
(21) Anmeldenummer: 10788257.3
(22) Anmeldetag: 06.12.2010
(51) Int. Cl.: C25B 9/20, H01M 8/02, H01M 8/24

(54) **VORRICHTUNG ZUR ENERGIEUMWANDLUNG, INSBESONDERE BRENNSTOFFZELLENSTACK ODER ELEKTROLYSEURSTACK**
ENERGY CONVERSION APPARATUS, IN PARTICULAR FUEL CELL STACK OR ELECTROLYZER
DISPOSITIF DE CONVERSION D'ÉNERGIE, EN PARTICULIER EMPILEMENT DE PILES À COMBUSTIBLE OU D'ÉLECTROLYSEURS

(30) Priorität: 10.12.2009 DE 102009057494
(43) Veröffentlichungstag der Anmeldung: 17.10.2012
(73) Patentinhaber: Westfälische Hochschule Gelsenkirchen, Bocholt, Recklinghausen, 45877 Gelsenkirchen (DE)
(72) Erfinder: BRODMANN, Michael, 46569 Hünxe (DE); GREDA, Martin, 45892 Gelsenkirchen (DE); MUTASCU, Cristian, 45894 Gelsenkirchen (DE); ROTH, Jeffrey, 40477 Düsseldorf (DE)
(74) Vertreter: Cohausz Hannig Borkowski Wißgott
(86) Internationale Anmeldenummer: PCT/EP2010/007384
(87) Internationale Veröffentlichungsnummer: WO 2011/069625

(56) Entgegenhaltungen:
- DE-A1- 10 003 528
- DE-T2- 69 916 515
- US-B1- 6 468 682

## Beschreibung

Die vorliegende Erfindung betrifft eine Vorrichtung zur Umwandlung chemischer Energie in elektrische Energie und/ oder elektrische Energie in chemische Energie mit einem Gehäuse, das zu mindestens einer Seite hin offen ist und in dem eine Druckkammer ausgebildet ist, und mit mindestens einer elektrochemisch aktiven Zelle zur Energieumformung, die sich von der offenen Seite des Gehäuses in das Gehäuse hinein erstreckt, wobei die offene Seite von einer die Zelle haltenden und/oder versorgenden Platte verschlossen ist.

Derartige Vorrichtungen sind als Brennstoffzelleneinheiten oder Elektrolyseurzelleneinheiten bekannt. Die aktive Zelle ist in diesem Falle eine Brennstoffzelle, die chemische Energie in elektrische Energie umwandelt, oder eine Elektrolyseurzelle, die elektrische Energie in chemische Energie umwandelt. Die Anordnung mehrerer plattenförmiger Zellen nebeneinander wird als Stack, insbesondere Brennstoffzellenstack oder Elektrolyseurstack bezeichnet.

Im Falle einer Brennstoffzelle werden ein Brennstoff und ein Oxidationsmittel kontinuierlich der Zelle zugeführt. Bei der Reaktion der beiden Betriebsstoffe wird ein Strom von Elektronen und damit elektrische Energie erzeugt. Konventionelle einzelne Brennstoffzellen erzeugen dabei eine geringe Spannung von ca. 1,2 V, demgegenüber jedoch einen vergleichsweise hohe Stromdichte bis zu etwa 3 Ampere pro Quadratzentimeter aktive Reaktionsfläche, wobei sich diese Flächenangabe auf die Größe der aktiven Flächen in einer Brennstoffzelle bezieht. Da diese aktiven Flächen bei modernen Membranbrennstoffzellen beispielsweise mit einer Polymer-Elektrolyt-Membran (PEM) und beidseitig daran anliegender Polplatten mehr als 100 Quadratzentimeter betragen kann, kann eine einzelne derartige Brennstoffzelle einen Strom von 300 Ampere und mehr, bei einer Gleichspannung von etwa 1,2 V liefern. Der resultierende Strom bildet sich aus dem Produkt der aktiven Fläche in cm² und der maximalen Stromdichte.

Da eine Gleichspannung von 1,2 V für viele technische Anwendungen zu gering ist, werden in konventionellen Brennstoffzelleneinheiten häufig mehrere Zellen in Reihe geschaltet, so dass sich die jeweiligen Spannungen der Zellen aufaddieren. Neben der elektrischen Reihenschaltung kann dabei auch eine Reihenschaltung der Versorgungsstruktur erfolgen, so dass die Zuleitung von Brennstoff und Oxidationsmittel zu einer Zelle gleichzeitig die Ableitung von Brennstoff und Oxidationsmittel aus der vorherigen Zelle sein kann. In derartiger Ausführung sind besonders kompakte Brennstoffzelleneinheiten herstellbar. Alternativ kann auch eine Parallelschaltung der Versorgungsstruktur realisiert sein.

Üblicherweise weisen konventionelle Brennstoffzellen eine flache, planare Form mit einer im Wesentlichen rechteckigen Grundfläche auf, so dass die einzelnen Zellen parallel nebeneinander oder übereinander gestapelt werden können. Es ergibt sich dadurch eine quaderförmige Gesamtstruktur deren Abmessung von der Anzahl und Fläche der Zellen abhängig ist. Die einzelnen Zellen sind in dem Stack fest miteinander verbunden. Um eine einzelne Zelle aus einem solchen festen Verbund beispielsweise im Falle eines Defektes herauszunehmen, müssen die elektrischen Verbindungen sowie die Zu- und Ableitungen des Brennstoffes, des Oxidationsmittels sowie die Ableitungen von Reaktionsprodukten gelöst werden. Weiterhin muss der gesamte Brennstoffzellenstack auseinandergebaut werden, d.h. die Druckplatten entfernt und die Bipolarplatten disassembliert werden. Dabei werden die unbeschädigten Membranen der nicht defekten Zellen oftmals zerstört. Dementsprechend ist das Herausnehmen einer einzelnen Brennstoffzelle aus einem solchen Stack nur mit erheblichem technischem und zeitlichem Aufwand möglich.

Demgegenüber sind, z.B. aus der US 6,468,682 B1, auch modulare Brennstoffzellenstacks bekannt, bei denen eine einzelne Brennstoffzelle modulartig in dem Brennstoffzellengehäuse herausnehmbar eingesetzt ist. Jede Brennstoffzelle bildet dabei eine abgeschlossene Einheit.

Für die Funktion einer Brennstoffzelle ist es notwendig, dass die Polplatten einen Druck auf die Polymer-Elektrolyt-Membran bzw. eine zwischen dieser Membran und der Polplatte angeordnete Gasdiffusionslage ausüben. Im Wesentlichen bewirkt der Druck die notwendige elektrische Kontaktierung zwischen Polplatten und Gasdiffusionslagen, so dass bei der Reaktion in der Brennstoffzelle entstehenden Elektronen zur Kathode gelangen.

Es sind unterschiedliche Möglichkeiten bekannt, den Druck aufzubauen. Beispielsweise kann dies über eine Bombierung der Polplatten erfolgen, wobei diese eine konkave Wölbung erhalten. Bei der Montage der Brennstoffzelle werden die Kanten der Polplatten elektrisch isoliert miteinander verbunden, so dass diese zusammen gezogen werden. Dies bewirkt eine Bombierung der Polplatten den gewünschten Anpressdruck. Alternativ kann der Anpressdruck durch Klammern, insbesondere Federstahlklammern erzeugt werden, die von außen auf eine Brennstoffzelle aufgesetzt werden. Weiterhin kann die Verpressung auch hydraulisch erfolgen. Die Polplatten sind dabei sehr dünn ausgebildet, so dass sie eine hohe Flexibilität erhalten. Ein von außen auf die Polplatten ausgeübter Druck bewirkt dann eine entsprechende Verformung der Polplatten, wobei der Druck auf die Gasdiffusionslagen weitergeleitet wird. Hierzu bildet das Gehäuse der Brennstoffzelleneinheit eine Druckkammer in der eine Flüssigkeit oder ein Gas, d.h. allgemein ein druckbehaftete Medium gehalten ist. Die Brennstoffzellen liegen in der Flüssigkeit ein, so dass beim Aufbau eines Überdrucks in der Druckkammer die Flüssigkeit den Druck auf die Polplatten überträgt. Dies stellt eine hydraulische Verpressung der Zellen dar. Eine solche Brennstoffzelleneinheit mit einem flexiblen Zwischenstück ist in der DE 100 03 528 offenbart.

Soll bei einer derartigen Brennstoffzelleneinheit eine defekte Brennstoffzelle gewechselt werden, ist ein Disassemblieren der Einheit erforderlich. Der Überdruck in der Druckkammer ist abzubauen und das Medium abzulassen. Erst dann kann ein Austausch der defekten Brennstoffzelle erfolgen. Aus diesem Grund ist auch das Wechseln einer defekten Zelle bei dem modularen System technisch arbeits- und zeitaufwendig, so dass sich eine Reparatur der Brennstoffzelleneinheit letztlich in höheren Kosten niederschlägt.

Aufgabe der vorliegenden Erfindung ist es, die genannten Nachteile zu überwinden und ein schnelles und einfaches Wechseln einer defekten Zelle zu ermöglichen, so dass entsprechende Reparaturkosten reduziert werden.

Diese Aufgabe wird durch die Merkmale des Anspruchs 1 gelöst. Vorteilhafte Weiterbildungen sind in den Unteransprüchen formuliert.

Es wird eine Vorrichtung zur Umwandlung chemischer Energie in elektrische Energie oder elektrische Energie in chemische Energie mit einem Gehäuse, das zu mindestens einer Seite hin offen ist und in dem eine Druckkammer ausgebildet ist, und mit mindestens einer elektrochemisch aktiven Zelle zur Energieerzeugung vorgeschlagen, die sich von der offenen Seite des Gehäuses in das Gehäuse hinein erstreckt, wobei die offene Seite von einer die Zelle haltenden und/oder versorgenden Platte verschlossen ist, zwischen dem Gehäuse und der Platte ein Dichtelement angeordnet ist, dass die offene Seite des Gehäuses unter Ausbildung der Druckkammer flüssigkeitsdicht verschließt und das zumindest teilweise aus einem elastischen Material gebildet ist, und wobei das Dichtelement mindestens eine sich in die Druckkammer erstreckende Tasche aufweist, in der die Zelle einliegt und deren Taschenwandung durch das elastische Material flexibel ist, so dass die Taschenwandung bei einem Überdruck in der Druckkammer an der Zelle anliegt.

Der Grundgedanke der vorliegenden Erfindung besteht darin, in einer Vorrichtung zur Umwandlung chemischer Energie in elektrische Energie oder elektrische Energie in chemische Energie, d.h. in einer Brennstoffzelleneinheit oder Elektrolyseurzelleneinheit, den Innenraum eines Gehäuses zur Ausbildung einer unter Druck setzbaren Kammer mit einem Mittel zu verschließen, das zumindest eine Tasche zur Aufnahme einer Brennstoffzelle oder Elektrolyseurzelle aufweist, wobei das Mittel zumindest im Bereich der Tasche flexibel ist und die Tasche in die Kammer hineinragt. Dies bewirkt, dass bei Erzeugung eines Überdrucks in der Druckkammer, sich die Taschenwandung an die in die Tasche eingesetzte Zelle anlegt und somit einen Druck auf die Polplatten der Zelle ausübt. Eine Zelle ist damit von einer schützenden Schicht, quasi in Gestalt einer Haut, nämlich der Taschenwandung des Mittels umgeben, die den Gehäuseinnenraum von der Zelle flüssigkeitsdicht und auch druckdicht trennt, so dass das Mittel ein Dichtelement bildet. Das Gehäuse der Vorrichtung und das Dichtmittel bilden gemeinsam eine abgeschlossene Kammer, in der der besagte Überdruck aufgebaut werden kann. Die Kammer kann mit Flüssigkeit gefüllt werden, die einen Überdruck in der Kammer auf die äußere Wand der Tasche überträgt und die Taschenwandung gegen die Polplatten der Zelle drückt. Es ergibt sich so ein hydraulisches oder pneumatisches Verpressen der Zelle.

Soll die Zelle aufgrund eines technischen Defekts gewechselt werden, ist es nunmehr lediglich noch notwendig, den Druck in der Kammer abzubauen. Ein Ablassen der Flüssigkeit ist nicht mehr erforderlich. Im drucklosen Zustand kann die Zelle aus der Tasche des Dichtelements entnommen, insbesondere ausgetauscht werden. Hierbei ist nur noch ein minimaler Zeitaufwand gegenüber dem Wechsel einer Zelle in einer konventionellen Brennstoffzelleneinheit oder Elektrolyseurzelleneinheit notwendig.

Das Dichtelement kann zumindest abschnittsweise in seinem Randbereich an Stirnseiten des Gehäuses gehalten, insbesondere durch wenigstens ein Befestigungsmittel fixiert sein. Dabei liegt das Dichtelement mit seinem Randbereich auf den zur offenen Seite des Gehäuses gerichteten Stirnseiten von Seitenwänden auf, wo es beispielsweise verklebt, verschweißt oder anders fixiert sein kann, beispielsweise mittels eines Rahmens als Befestigungsmittel, der über Schraubverbindungen auf die Stirnseiten aufgesetzt werden kann und das Dichtelement auf die Stirnseite presst. Auf diese Weise wird das Gehäuse mit dem Dichtelement flüssigkeitsdicht und insbesondere auch druckdicht verschlossen, wobei zwischen den Gehäusewänden und dem Dichtelement die Druckkammer ausgebildet wird.

Insbesondere kann die erfindungsgemäße Vorrichtung mehrere aktive Zellen aufweisen, wobei in dem Dichtelement für jede dieser Zellen eine Tasche ausgeformt ist. Auf diese Weise kann ein Brennstoffzellenstack oder Elektrolyseurzellenstack hergestellt werden, bei dem der Wechsel einer Zelle auf einfache und schnelle Weise möglich ist.

Im Falle planar ausgebildeter Zellen, können die Taschen parallel zueinander ausgebildet sein, so dass sich eine stapelförmige Anordnung der Zellen im Gehäuse ergibt.

In einer vorteilhaften Weiterbildung der erfindungsgemäßen Vorrichtung kann das Gehäuse zwei sich gegenüberliegende offene Seiten aufweisen, die jeweils durch ein Dichtelement mit wenigstens einer Tasche verschlossen sind. Es erstreckt sich dann jede Tasche von jeweils einer der offenen Seiten in die Druckkammer hinein. Die Taschen der sich gegenüber liegenden Dichtelemente können dabei parallel nebeneinander liegen. Auf diese Weise kann die Vorrichtung in Stapelrichtung, d.h. in Richtung nebeneinander angeordneter Zellen erheblich verkürzt werden.

Insbesondere bei Brennstoffzelleneinheiten und Elektrolyseurzelleneinheiten mit mehreren, insbesondere einer Vielzahl von Zellen können diese auf die beiden offenen Seiten des Gehäuses verteilt werden, so dass sich ein Teil der Zellen von der einen offenen Seite und ein Teil der Zellen von der anderen offenen Seite in das Gehäuse hinein erstrecken, bzw. die die Zellen umgebenden Taschen sich in die Druckkammer hinein erstrecken. Damit kann ein symmetrischer Aufbau der Einheiten in Bezug zur Mittelebene des Gehäuses in Einsteckrichtung der Zellen erreicht werden. Es ist dabei vorteilhaft, die Taschen eines Dichtelements gegenüber den Taschen des gegenüberliegenden Dichtelements um jeweils den halben Abstand zweier benachbarter Taschen zueinander zu versetzen, so dass in die druckkammerseitigen Zwischenräume zwischen zwei Taschen des einen Dichtelements die Taschen des anderen Dichtelements sowie in den druckseitigen Zwischenräumen zwischen zwei Taschen des anderen Druckelements die Taschen des einen Druckelements angeordnet sind. Hierdurch ergibt sich eine besonders kompakte Bauform für eine Brennstoffzelleneinheit oder Elektrolyseurzelleneinheit.

In einer ersten Ausführungsvariante kann das Dichtelement aus einem in der Form im Wesentlichen stabilen Formteileinsatz gebildet sein, dessen Form durch Krafteinwirkung veränderbar ist. Der Formteileinsatz kann im Spritzgussverfahren beispielsweise aus einem Silikon oder Polyurethan hergestellt sein. Bei der Verwendung eines Formteileinsatzes sind keine zusätzlichen Hilfsmittel zu Stabilisierung der Form des Dichtelementes erforderlich, so dass das Assemblieren der erfindungsgemäßen Vorrichtung schnell und einfach möglich ist.

Vorzugsweise kann die Innenform einer Tasche an die geometrische Außenform der in die Tasche einzusetzenden Zelle angepasst sein. Weiterhin kann das Innenmaß einer Tasche an das geometrische Außenmaß der in die Tasche einzusetzenden Zelle angepasst sein. Damit ist ein Einsetzen der Zelle in die Tasche oder ein entsprechendes Herausnehmen aus der Tasche im drucklosen Zustand der Druckkammer ohne erhöhten Kraftaufwand möglich. Ferner gewährleistet die Formanpassung, dass ein Überdruck in der Druckkammer effektiv auf die Zelle übertragen wird, da zwischen der Taschenwandung und der Zelle kein Luftspalt vorhanden ist.

In einer alternativen Ausführungsvariante kann das Dichtelement als Tuch ausgebildet sein, das in länglichen Ausnehmungen von zwei sich gegenüberliegenden Seitenwänden des Gehäuses, die sich zur offenen Seite des Gehäuses öffnen, schlaufenartig einliegt. Hierbei wird eine Tasche zur Aufnahme einer Zelle ausgebildet. Damit die Tasche rechtwinklig zu den Seitenwänden des Gehäuses ist, sollten die sich gegenüber liegenden Ausnehmungen zueinander ausgerichtet sein, d.h. direkt gegenüberliegen.

Das Tuch kann eine Dicke zwischen 0,5 mm bis 1,5 mm, vorzugsweise 1 mm aufweisen, so dass es sehr flexible und elastisch ist, und sich ganzflächig auf die Polplatten einer Zelle legen kann, wenn in der Druckkammer ein Überdruck aufgebaut wird.

Da das Tuch ohne Hilfsmittel keine stabile Form beibehält, kann es durch Zinnen, die in ihrer Form und Abmaße der länglichen Ausnehmungen entsprechen, in den Ausnehmungen kraftschlüssig fixiert sein. Die Zinnen pressen dabei das Tuch gegen die Innenseiten der Ausnehmungen, so dass die Druckkammer durch das Tuch flüssigkeits- und druckdicht verschlossen wird.

Für die Verwendung dieser konstruktiven Ausgestaltung bei einer Vorrichtung mit zwei oder mehr Zellen können in den Seitenwänden des Gehäuses entsprechend zwei oder mehr gegenüberliegende Ausnehmungen vorgesehen sein. In jeder dieser Ausnehmungen ist das Tuch dann mit einer Zinne zu fixieren. Vorzugsweise können die in die Ausnehmungen derselben Seitenwand einliegenden Zinnen gemeinsam an einer Zinnenleiste gehalten sein. Das Verspannen des Tuchs in den Ausnehmungen an einer Seitenwand wird damit durch einen einzigen Fügeschritt bei allen Ausnehmungen gleichzeitig bewirkt. Dies vereinfacht und verkürzt das Assemblieren der Vorrichtung zusätzlich. Die Zinnen können mit der Zinnenleiste einstückig ausgebildet sein.

In einer Ausführungsvariante der Vorrichtung mit mehreren Zellen können die zueinander gerichteten Polplatten zweier benachbarter Zellen über eine elektrische, mechanisch steife Brücke miteinander verbunden sein. Wird dies bei allen benachbarten Zellen durchgeführt, ergibt sich dadurch eine Reihenschaltung der Zellen, so dass sich die von den Zellen gelieferten Spannungen jeweils aufaddieren oder eine an die Reihenschaltung der Zellen angelegte Spannung auf die Zellen im Wesentlichen gleichmäßig verteilt. Die Brücke verbindet dabei die Anode der einen Zelle mit der Katode der anderen Zelle.

Die Brücke kann vorzugsweise einteilig mit den Polplatten ausgebildet sein. So kann die Brücke aus demselben Material und in einem einheitlichen Verfahrensschritt mitsamt der Polplatten hergestellt werden. Alternativ kann die Brücke Teil zweier Lamellen sein, die jeweils in eine Tasche hineinreichen und die an jeweils einer Polplatte zweier benachbarter Zellen anliegen. Die Herstellung kann beispielsweise aus einem Stahl- oder Kupferblech oder auch einem kupferbeschichteten Stahlblech erfolgen, aus dem die beiden Polplatten oder die beiden Lamellen und die Brücke gleichzeitig in einer Form gestanzt und/oder geprägt werden, wobei anschließend eine Verformung der Polplatten oder der Lamellen in einem Biegeprozess derart erfolgt, dass die Polplatten/ Lamellen sich letztendlich parallel gegenüber liegen. Dabei wird eine der Polplatten um 180° gegenüber der anderen Polplatte/ Lamelle gebogen. Die elektrische Brücke kann dabei im Wesentlichen U-förmig geformt sein. Vorzugsweise erstreckt sich die Brücke nicht über die gesamte Länge einer Polplatte. Vielmehr kann die Brücke nur etwa 20-50% der Länge einer Polplatte betragen und mittig angeordnet sein, so dass im eingesetzten Zustand der mit der Brücke verbundenen Polplatten rechtsseitig und/ oder linksseitig der elektrischen Brücke Versorgungsleitungen von und zu den einzelnen Zellen angeordnet werden können.

Weiterhin ist es von Vorteil, am Grund einer Tasche eine Abstandshalter vorzusehen. Ein derartiger Abstandshalter verhindert die Beschädigung des Tuchs durch eine scharfe Kante einer Polplatte, wenn sich das Tuch durch den Überdruck in der Druckkammer an die Polplatte der Zelle anlegt. Die Innenseite einer durch das Tuch ausgebildeten Tasche wird dadurch zur Kante der Polplatte auf Abstand gehalten.

In einer vorteilhaften Weiterbildung des Abstandshalters kann dieser als längliches Formteil mit zwei Langnuten zur Aufnahme der Kanten der Polplatten einer Zelle oder der Kanten der Lamellen ausgebildet sein. Dabei kann sich das Formteil über die gesamte Länge einer Tasche erstrecken, so dass an jeder Stelle des Grundes einer Tasche ein Abstand des Taschenbodens zu den Kanten der Polplatten gehalten wird. Weiterhin kann der Abstandshalter aus einem gummielastischen Material hergestellt sein. Das Einstecken der Polplatten oder der Lamellen in den Abstandshalter bewirkt eine Formstabilisierung der Tasche.

Weitere Merkmale und Vorteile der Erfindung werden nachfolgend anhand von zwei konkreten Ausführungsbeispielen und der beigefügten Figuren erläutert. Dabei bedeuten gleiche Bezugszeichen gleiche oder zumindest funktionsgleiche Teile.

Es zeigen:
Figur 1: Brennstoffzelleneinheit gemäß einer ersten Ausführungsvariante mit Formteileinsatz als Dichtelement in Explosionsdarstellung
Figur 2: Schnitt der Brennstoffzelleneinheit nach Figur 1 in zusammengesetztem Zustand entlang einer Mittelebene in Stapelrichtung
Figur 3: Darstellung des Formteileinsatzes in Seitenansicht
Figur 4: Blick auf die Schnittebene der Brennstoffzelleneinheit gemäß Figur 2
Figur 5: Brennstoffzelleneinheit gemäß einer zweiten Ausführungsvariante mit Tuch als Dichtelement in Explosionsdarstellung
Figur 6: Vorderansicht der Brennstoffzelleneinheit gemäß Figur 5
Figur 7: Schnitt der Brennstoffzelleneinheit nach Figur 5 in zusammengesetztem Zustand entlang einer Mittelebene in Stapelrichtung
Figur 8: Brennstoffzelleneinheit nach Figur 5 in Zusammengesetztem Zustand in perspektivischer Sicht.

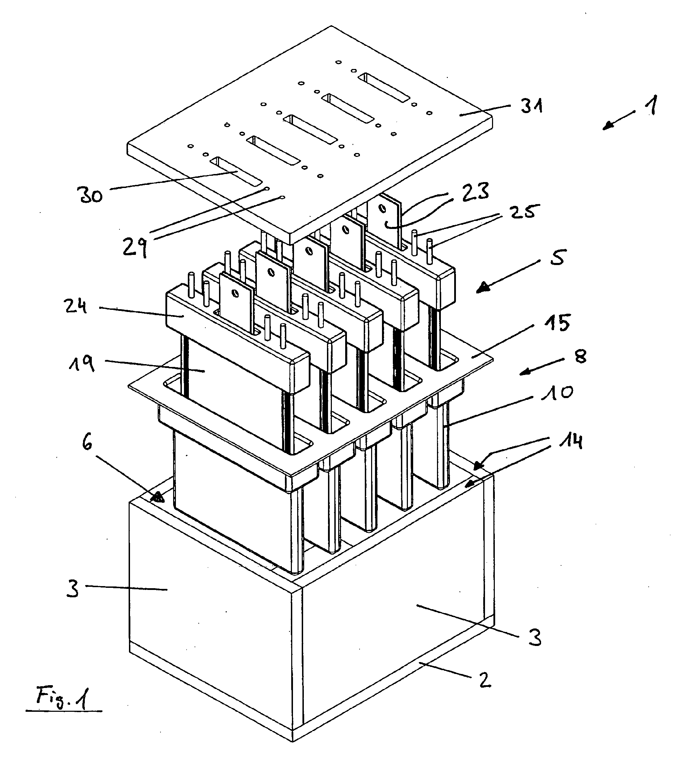

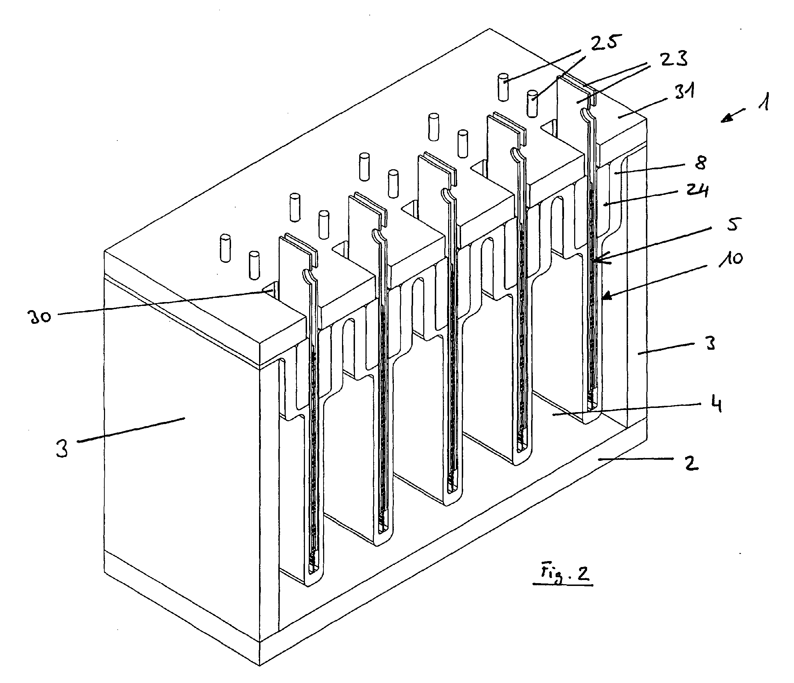

Figur 1 zeigt eine Brennstoffzelleneinheit 1 gemäß einer ersten Ausführungsvariante der Erfindung mit einem Gehäuse, das eine Bodenplatte 2, und vier Seitenwände 3 umfasst. Das Gehäuse ist somit zu fünf Seiten hin geschlossen und zu einer Seite 6 hin offen ausgebildet. Diese offene Seite 6 wird durch ein Dichtelement 8 flüssigkeitsdicht und druckdicht verschlossen, das als formstabiler Formteileinsatz 8 ausgebildet ist. Dabei weist der Formteileinsatz 8 einen kragenförmigen äußeren Randbereich 15 auf, der auf Stirnseiten 14 der Seitenwände 3 aufliegt, insbesondere durch nicht dargestellte Befestigungsmittel auf die Stirnseiten 14 gepresst wird, so dass das Gehäuse mit seinen Seitenwänden 3 und dem Boden und der Formteileinsatz 8 eine abgeschlossene Kammer 4 bilden, siehe Figur 2.

In dem Formteileinsatz 8 weist 5 Taschen auf, die sich in die Kammer 4 hinein, d.h. in Richtung des Bodens 2 des Gehäuses erstrecken. Jede dieser Taschen 10 ist in ihrer Form und Innenabmessung an eine Brennstoffzelle 5 angepasst, die im zusammengesetzten Zustand der Brennstoffzelleneinheit 1 in die entsprechende Tasche 10 eingesetzt ist. Die Brennstoffzellen 5 sind flächig ausgebildet und weisen an einer Schmalseite einen Sockel 24 auf, der breiter ausgebildet ist als der übrige Teil der Brennstoffzelle. Von dem Sockel 24 erstrecken sich Versorgungsanschlüsse 25 für Betriebsstoffe und elektrische Stromabnehmer 23 durch entsprechende Öffnungen in einer Platte 31 nach außen. Hierdurch hält die Platte 31 die Brennstoffzellen 5 in Position.

Figur 2 zeigt die Brennstoffzelle 1 in zusammengesetztem Zustand. Der Formteileinsatz 8 ist dabei zwischen dem Gehäuse 2, 3 und der Platte 31 angeordnet, wobei die Platte 31 den Formteileinsatz 8 an seinem äußeren Randbereich 15 auf die Stirnseiten 14 der Seitenwände 3 drückt. Die Kammer 4 ist dadurch von dem Boden 2, den Seitenwänden 3 und dem Formteileinsatz 8 abgeschlossen. Die in dem Formteileinsatz 8 ausgebildeten Taschen 10 erstrecken sich in die Kammer 4 hinein. In jeder Tasche 10 ist eine Brennstoffzelle 5 aufgenommen. Die Versorgungsanschlüsse 25 der Zellen sind durch Bohrungen 29 der Platte hindurch gesteckt. Die Stromabnehmer 23 sind durch Ausnehmungen 30 in der Platte geführt und stehen in einer Reihe mit den Versorgungsanschlüssen 25 derselben Zelle 5.

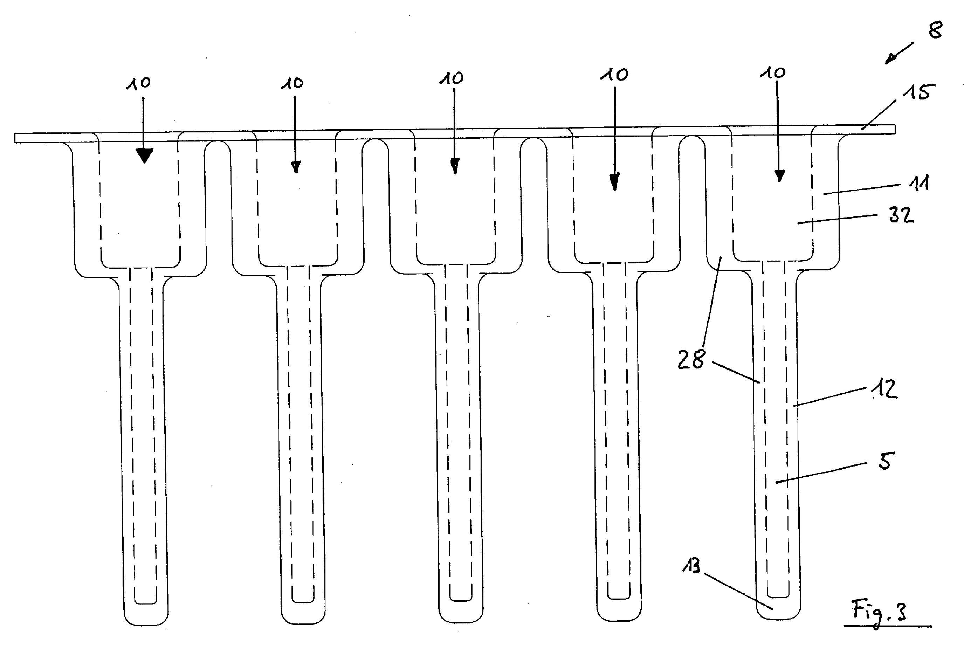

Figur 3 zeigt das erfindungsgemäße Dichtelement 8 in vergrößerter Darstellung. An dem Dichtelement 8 sind fünf gleiche Taschen 10 von im Wesentlichen flacher Form angeformt, die sich äquidistant und parallel zueinander von einem ebenen Bereich, der den kragenförmigen Randbereich umfasst, weg erstrecken. Jede Tasche 10 ist durch eine Taschenkammer 32, die eine Brennstoffzelle 5 aufnehmen kann, und eine Taschenwandung 28 gebildet, die die Brennstoffzelle 5 umgibt und von dem übrigen Teil der Brennstoffzelleneinheit 1 isoliert. Die Taschenkammer ist durch eine gestrichelte Linie angedeutet. Weiterhin weist jede Tasche 10 einen breiten ersten Taschenabschnitt 11, einen schmaleren unteren Taschenabschnitt 12 und einen Taschenboden 13 auf. Der obere Taschenabschnitt 11 nimmt den Sockel 24 einer Zelle auf, wohingegen der untere Taschenabschnitt 12 den aktiven Teil einer Zelle 5 aufnimmt.

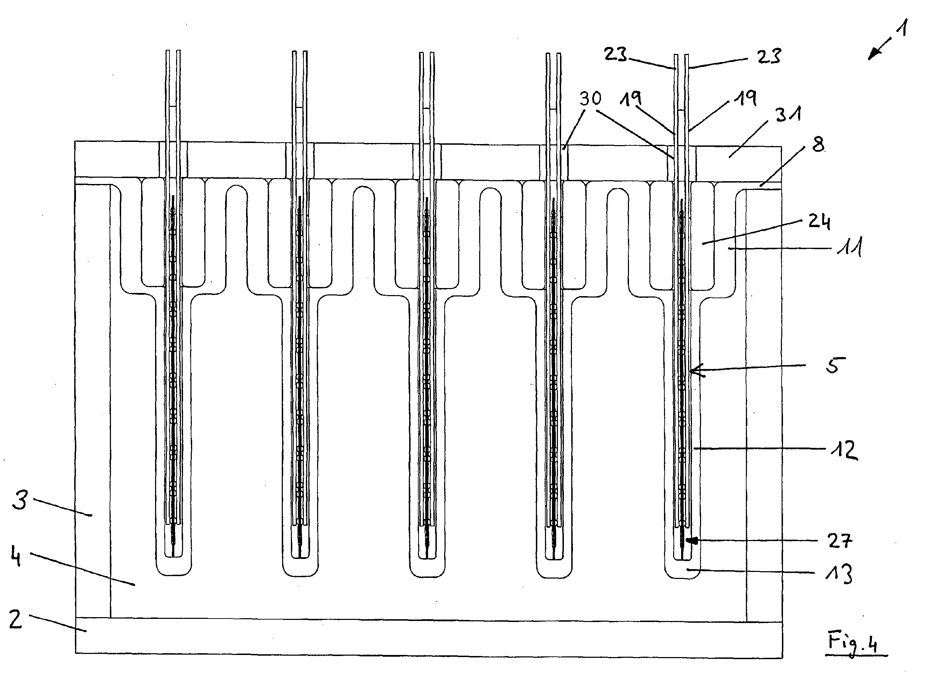

Figur 4 zeigt einen Blick auf die Schnittebene der Brennstoffzelleneinheit 1 gemäß Figur 2 durch die Brennstoffzellen 5. Die Brennstoffzellen 5 weisen jeweils zwei Polplatten 19 auf, die eine Anode und eine Kathode der Zelle bilden. Zwischen den Polplatten 19 ist jeweils eine Polymer-Elektrolyt-Membran (PEM) 27 angeordnet. Weiterhin kann zwischen der Membran 27 und den Polplatten 19 eine nicht dargestellte Gasdiffusionslage angeordnet sein. Zwischen der Membran 27 und den Polplatten 19 sind Kanäle ausgebildet, in denen die Betriebsstoffe, d.h. Brennstoff und Oxidationsmittel geführt sind. Die Polplatten 19 gehen in die Stromabnehmer 23 über, die durch die Ausnehmungen 30 der Platte 31 hindurchgeführt sind.

Der Formteileinsatz 8 in der Ausführungsvariante nach den Figuren 1 bis 4 ist elastisch verformbar und einstückig aus einem Silikon oder Polyurethan hergestellt. Die Wandstärke der Taschenwandung 28 und die Dicke im ebenen Bereich, insbesondere im Randbereich 15, betragen zwischen einem und vier Millimeter, so dass die Formstabilität des Formteileinsatzes gewährleistet ist. Die Ausformung der Taschen 10 führt zu einer zusätzlichen Versteifung des Formteileinsatzes 8.

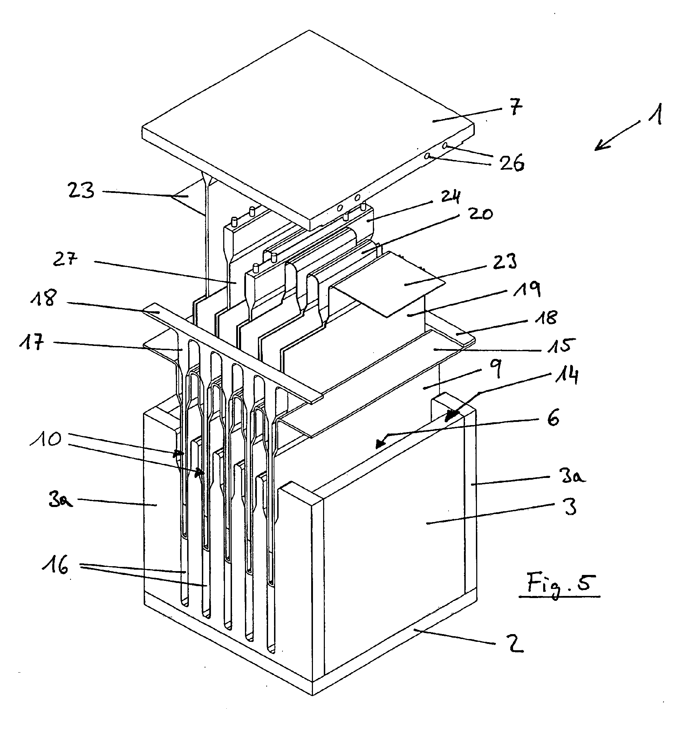

Figuren 5 bis 8 zeigen eine zweite Ausführungsvariante der Erfindung. Die Brennstoffzelleneinheit 1 unterscheidet sich von derjenigen gemäß Figur 1 darin, dass das das Gehäuse verschließende Dichtelement durch ein forminstabiles, flexibles Tuch 9 gebildet ist. Das Tuch 9 weist eine Breite auf, die in etwa der Breite der Brennstoffzellen 5 zuzüglich eines Überstandes zur Fixierung des Tuchs 9 am Gehäuse 3 entspricht. Die Länge des Tuchs 9 ist abhängig von der Anzahl der Brennstoffzellen und beträgt bei n Zellen mit einer Länge L mehr als 2*L*n. So kann die Tuchlänge bei 5 Zellen mit einer Länge von ca. 10 cm ca. 1,2m betragen.

Zwei gegenüberliegende Seitenwände 3a des Gehäuses weisen Ausnehmungen 16 auf, die sich zur offenen Seite 6 des Gehäuses öffnen. Die Ausnehmungen 16 in den Seitenwänden 3a liegen sich direkt gegenüber. In den Ausnehmungen 16 liegt schlaufenartig das Tuch 9 ein. Das Tuch 9 ist dabei ausgehend von der Stirnseite 14 der Seitenwände 3, 3a zunächst entlang der einen Innenseite einer Ausnehmung nach unten zu deren Boden geführt, dort zu der gegenüberliegenden Innenseite weitergeführt und vom Boden aus an dieser Innenseite nach oben zur Ausnehmungsöffnung zurückgeführt. Dort tritt das Tuch 6 aus der Ausnehmung 16 aus, ist über die Stirnseite der Seitenwand 3a geführt und tritt in die benachbarte Ausnehmung 16 ein. In dieser Art ist das Tuch durch alle Ausnehmungen 16 schlaufenartig oder schlangenartig geführt.

Das Tuch 9 wird durch Zinnen 17 in den Ausnehmungen 16 gehalten. Die Zinnen 17 entsprechen in ihren Längen- und Breitenabmessungen den Innenmaßen der Ausnehmungen 16, so dass das Tuch 9 zwischen den Zinnen 17 und den Innenseiten der Ausnehmungen 16 eingepresst wird. Die Zinne 17 sind an einer Zinnenleiste 18 gehalten, mit der sie einstückig ausgebildet sind. Die Zinnenleiste 18 weist damit eine kammartige Gestalt auf. Jenseits der endseitigen Zinnen 17 ist die Leiste 18 verlängert und drückt im eingesetzten Zustand der Zinnen 17 das Tuch 9 jenseits der endseitigen Ausnehmungen 16 fest auf die Stirnseite 14 der Seitenwand 3a.

Durch das Verlegen des Tuchs 9 entlang einer der Innenseiten zweier sich gegenüberliegender Ausnehmungen 16 und entsprechender Fixierung durch Einsetzen jeweils einer Zinne in die Ausnehmungen 16 wird das Tuch von einer Seitenwand 3a des Gehäuses zu der gegenüberliegenden Seitenwand 3a unter Ausbildung jeweils einer Tasche 10 gespannt.

Auch in der Ausführungsform gemäß Figur 5 sind fünf Taschen ausgebildet, die jeweils eine Brennstoffzelle 5 aufnehmen. Wie bei der vorherigen Ausführungsform umfassen die Brennstoffzellen 5 jeweils zwei gegenüberliegende Polplatten 19, zwischen denen eine Membran 27 liegt, die sich von einem Sockel 24 in die jeweilige Tasche 10 hineinerstreckt. Ein Sockel 24 weist an seiner Schmalseite Versorgungsanschlüsse 25 auf, die in eine Versorgungsplatte 7 einsteckbar bzw. eingesteckt sind. Über die Versorgungsplatte 7 wird die Membran 27 und damit auch die Zelle 5 selbst gehalten sowie mit Betriebsstoffen versorgt. Hierfür kann die Versorgungsplatte 7 eine Kanalstruktur mit Eintritts- und Austrittöffnungen aufweisen, über die alle Zellen 5 versorgt oder Reaktionsprodukte entsorgt werden. Eine derartige Versorgungsplatte 7 wird auch als Backplane bezeichnet.

Von den Polplatten 19 erstreckt sich jeweils ein Stromabnehmer 23 in Richtung der Versorgungsplatte 7, wobei die jeweils nach außen gerichteten Polplatten 19 der endseitigen Brennstoffzellen 5 um 90° abgewinkelte elektrische Anschlusskontakte 23 besitzen. Weiterhin sind die übrigen Polplatten 19 jeweils über eine mechanische Brücke 20 elektrisch mit der Polplatte der Nachbarzelle 5 verbunden, wobei die Anode einer Zelle mit der Kathode der anderen Zelle 5 verbunden ist. Die Zellen 5 damit in Reihe geschaltet. Die miteinander verbundenen Polplatten 19 und die sie verbindende Brücke 20 sind einteilig ausgebildet. Die Brücke 20 ist U-förmig und besitzt nur ca. ein Drittel der Breite einer Zelle 5. In Querrichtung der Zellen 5 sind die Brücken 20 jeweils mittig der Polplatten 19 angeordnet, so dass rechtsseits und linksseits der Brücke 20 nicht dargestellte Versorgungsleitungen angeordnet sein können.

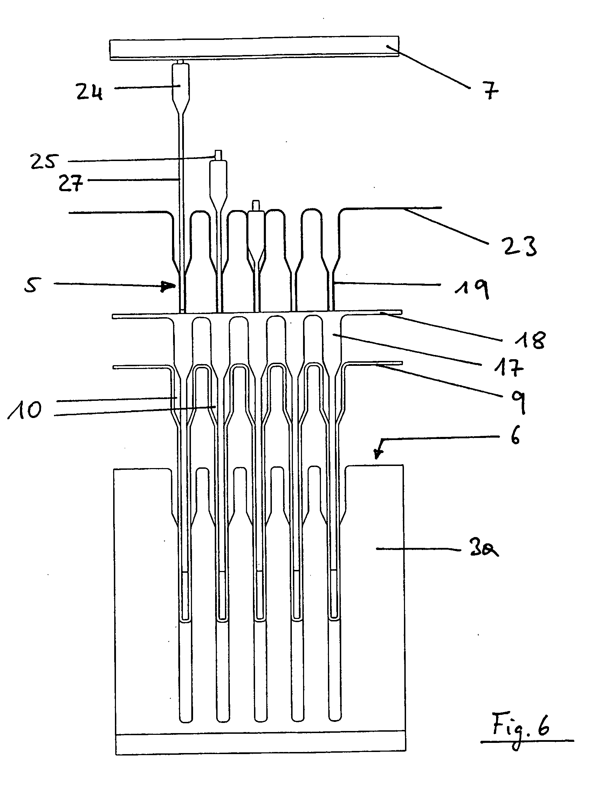

Figur 6 zeigt die Anordnung gemäß Figur 5 in einer Explosionsdarstellung von einer Frontalansicht auf die geschlitzten Seitenwände 3a des Gehäuses.

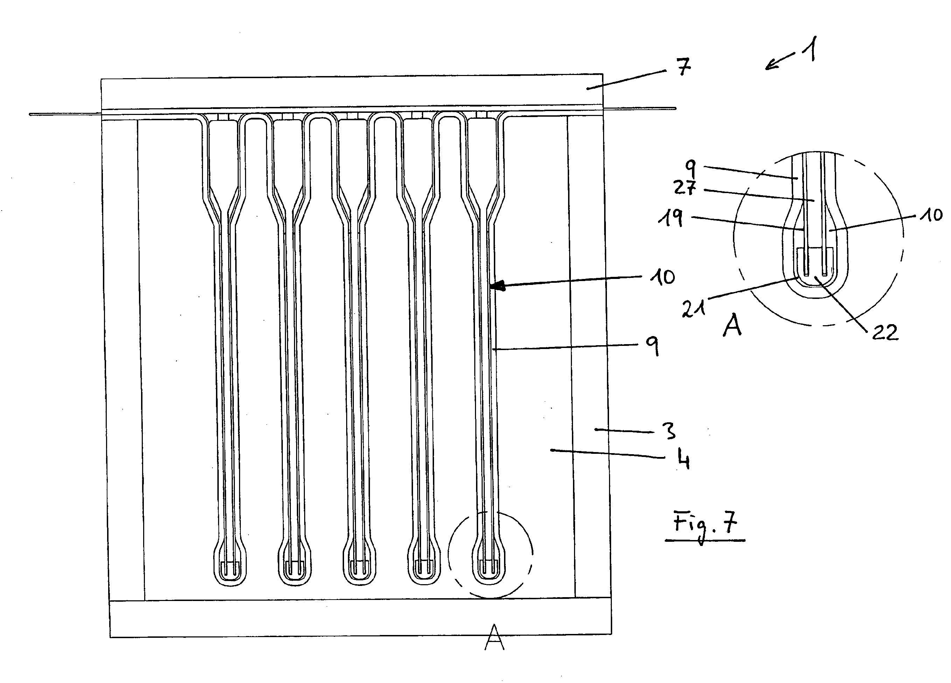

Figur 7 zeigt die Brennstoffzelleneinheit 1 nach Figuren 5 und 6 im assemblierten Zustand. Das Tuch 9 ist zwischen der Versorgungsplatte 7 und den Seitenwänden 3, 3a des Gehäuses angeordnet und verschließt die offene Seite 6 des Gehäuses, so das die Druckkammer 4 ausgebildet wird. Hervorgehoben und vergrößert dargestellt ist in Figur 7 das Detail A. Es zeigt den bodenseitigen Bereich einer Tasche 10, wobei am Grund 21 der Tasche 10 ein Abstandshalter 22 einliegt. Der Abstandshalter 22 ist durch ein längliches Formteil mit zwei Langnuten gebildet, in denen die Kanten der Polplatten 19 der Zelle aufgenommen sind. Der Abstandhalter 22 ist zum Grund hin abgerundet und hält die Kanten der Polplatten 19 auf Abstand zum Tuch 9, so dass diese das Tuch 9 nicht beschädigen, wenn es allseitig gegen die Polplatten 19 drückt.

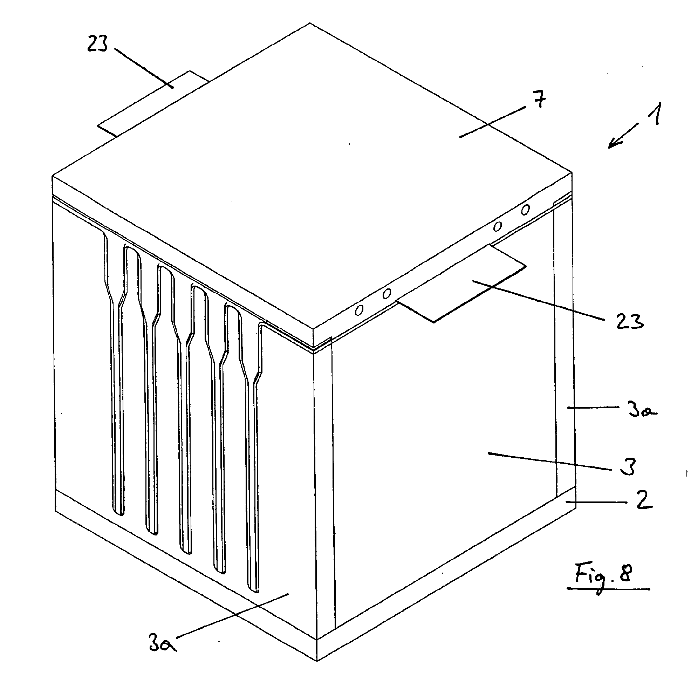

Figur 8 zeigt die Brennstoffzelle nach den Figuren 5 und 6 in einem vollständig assemblierten Zustand. Die elektrischen Anschlüsse 23 ragen aus dem quaderförmigen Gehäuse heraus, das von der der Bodenplatte, den Seitenwänden 3, 3a und der Versorgungsplatte 7 gebildet wird.

Im funktionsfähigen Zustand der Brennstoffzelleneinheit 1 nach den Figuren 1 bis 8 ist in der Kammer 4 eine Flüssigkeit eingefüllt. Wird in der Kammer 4, ein Überdruck erzeugt, gibt die Flüssigkeit diesen Druck an die Taschen 10 weiter, da eine Flüssigkeit inkompressibel ist. Damit wird von außen auf die Taschen 10 ein Druck ausgeübt, infolgedessen die Innenwand der Taschen 10 auf die Polplatten 10 und diese wiederum auf die Membran 27 oder auf zwischen der Membran 27 und den Polplatten 19 angeordnete Gasdiffusionsplatten gedrückt wird.

Muss eine Zelle 5 aufgrund eines Defekts gewechselt werden, ist es lediglich erforderlich, den Druck in der Kammer 4 abzubauen. Im drucklosen Zustand kann dann die defekte Zelle 5 mühelos und schnell aus der entsprechenden Tasche 10 entfernt und durch eine neue Zelle 5 ersetzt werden. Hierdurch können Zeit und letztendlich Kosten eingespart werden.

### Bezugszeichenliste:

- 1: Vorrichtung, Brennstoffzelleneinheit
- 2: Bodenplatte
- 3: Seitenwand
- 3a: Seitenwand mit Ausnehmungen
- 4: Druckkammer
- 5: aktive Zelle, Brennstoffzelle
- 6: offene Seite des Gehäuses
- 7: Backplane, Versorgungsplatte
- 8: Dichtelement, Formteileinsatz
- 9: Dichtelement, Tuch
- 10: Tasche
- 11: oberer Taschenabschnitt
- 12: unterer Taschenabschnitt
- 13: Taschenboden
- 14: Stirnseiten der Seitenwände
- 15: Randbereich des Dichtelements
- 16: Ausnehmungen
- 17: Zinne
- 18: Zinnenleiste
- 19: Polplatte
- 20: Brücke
- 21: Grund einer Tasche
- 22: Abstandshalter, Gummiformteil
- 23: Stromanschluss
- 24: Sockel
- 25: Versorgungsanschlüsse
- 26: Kanäle für Betriebs- und Reaktionsstoffe
- 27: Membran
- 28: Taschenwand
- 29: Bohrung
- 30: Ausnehmung
- 31: Platte
- 32: Kammer
- 33: Versorgungsanschlüsse

## Patentansprüche

1. Vorrichtung (1) zur Umwandlung chemischer Energie in elektrische Energie und/ oder elektrische Energie in chemische Energie mit einem Gehäuse (2, 3, 3a), das zu mindestens einer Seite (6) hin offen ist und in dem eine Druckkammer (4) ausgebildet ist, und mit mindestens einer elektrochemisch aktiven Zelle (5) zur Energieumformung, die sich von der offenen Seite (6) des Gehäuses (2, 3, 3a) in das Gehäuse (2, 3, 3a) hinein erstreckt, wobei die offenen Seite (6) von einer die Zelle (5) haltenden und/ oder versorgenden Platte (7, 31) verschlossen ist, wobei zwischen dem Gehäuse (2, 3, 3a) und der Platte (7, 31) ein Dichtelement (8, 9) angeordnet ist, das die offene Seite (6) des Gehäuses (2, 3, 3a) unter Ausbildung der Druckkammer (4) flüssigkeitsdicht und/ oder gasdicht verschließt und das zumindest teilweise aus einem elastischen Material gebildet ist, **dadurch gekennzeichnet, dass** das Dichtelement (8, 9) mindestens eine sich in die Druckkammer (4) erstreckende Tasche (10) aufweist, in der die Zelle (5) einliegt und deren Taschenwandung (28) durch das elastische Material flexibel ist, so dass die Taschenwandung (28) bei einem Überdruck in der Druckkammer (4) an der Zelle (5) anliegt.

2. Vorrichtung (1) nach Anspruch 1, **dadurch gekennzeichnet, dass** das Dichtelement (8, 9) zumindest abschnittsweise in seinem Randbereich (15) an Stirnseiten (14) des Gehäuses (2, 3, 3a) gehalten, insbesondere durch wenigstens ein Befestigungsmittel fixiert ist.

3. Vorrichtung (1) nach Anspruch 1 oder 2, **dadurch gekennzeichnet, dass** sie mehrere aktive Zellen (5) aufweist und in dem Dichtelement (8, 9) für jede Zelle (5) eine Tasche (10) ausgeformt ist.

4. Vorrichtung (1) nach Anspruch 3, **dadurch gekennzeichnet, dass** die aktiven Zellen (5) planar ausgebildet sind und die Taschen (10) parallel zueinander liegen.

5. Vorrichtung (1) nach einem der vorherigen Ansprüche, **dadurch gekennzeichnet, dass** das Gehäuse (2, 3, 3a) zwei, sich gegenüberliegende offene Seiten (6) aufweist, die jeweils durch ein Dichtelement (8, 9) mit wenigstens einer Tasche (10) verschlossen sind, wobei sich die Taschen (10) jeweils von einer der offenen Seiten (6) in die Druckkammer (4) hineinerstrecken und parallel nebeneinander liegen.

6. Vorrichtung (1) nach einem der vorherigen Ansprüche, **dadurch gekennzeichnet, dass** das Dichtelement (8, 9) aus einem in der Form im Wesentlichen stabilen Formteileinsatz (8) gebildet ist.

7. Vorrichtung (1) nach einem der vorherigen Ansprüche, **dadurch gekennzeichnet, dass** das Innenmaß einer Tasche (10) an das geometrische Außenmaß der Zelle (5) angepasst ist.

8. Vorrichtung (1) nach einem der Ansprüche 1 bis 5, **dadurch gekennzeichnet, dass** das Dichtelement (8, 9) durch ein Tuch (9) gebildet ist, und das zwei sich gegenüber liegende Seitenwände (3, 3a) des Gehäuses (2, 3, 3a) jeweils mindestens eine längliche Ausnehmung (16) aufweist, die sich zur offenen Seite (6) des Gehäuses (2, 3, 3a) öffnen, wobei das Tuch (9) zur Ausbildung einer Tasche (10) schlaufenartig in die Ausnehmungen (16) einliegt.

9. Vorrichtung (1) nach Anspruch 8, **dadurch gekennzeichnet, dass** das Tuch (9) durch Zinnen (17) die in ihrer Form der länglichen Ausnehmungen (16) entsprechen, in den Ausnehmungen (16) kraftschlüssig fixiert ist.

10. Vorrichtung (1) nach Anspruch 9, **dadurch gekennzeichnet, dass** die Seitenwände (3, 3a) jeweils zwei oder mehr Ausnehmungen (16) aufweisen, wobei die in die Ausnehmungen (16) einer Seitenwand (3, 3a) einliegenden Zinnen (17) gemeinsam an einer Zinnenleiste (18) gehalten sind.

11. Vorrichtung (1) nach einem der Ansprüche 3 bis10, **dadurch gekennzeichnet, dass** die Zellen (5) Polplatten (19) aufweisen, wobei die zueinander gerichteten Polplatten zweier benachbarter Zellen (5) über eine elektrische, mechanisch steife Brücke (20) miteinander verbunden sind.

12. Vorrichtung (1) nach Anspruch 11, **dadurch gekennzeichnet, dass** die Brücke (20) einteilig mit den Polplatten (19) ausgebildet ist.

13. Vorrichtung (1) nach Anspruch 11, **dadurch gekennzeichnet, dass** die Brücke (20) Teil zweier Lamellen ist, die jeweils in eine Tasche (10) hineinreichen und an jeweils einer Polplatte (19) zweier benachbarter Zellen (5) anliegen.

14. Vorrichtung (1) nach einem der vorherigen Ansprüche, **dadurch gekennzeichnet, dass** am Grund (21) einer Tasche (10) ein Abstandshalter (22) einliegt.

15. Vorrichtung (1) nach Anspruch 14, **dadurch gekennzeichnet, dass** der Abstandshalter (22), ein längliches Formteil mit zwei Langnuten zur Aufnahme der Kanten der Polplatten (19) einer Zelle (5) oder der Kanten der Lamellen ist.

16. Vorrichtung (1) nach einem der vorherigen Ansprüche, **dadurch gekennzeichnet, dass** das Dichtelement (8, 9) aus einem Silikon oder einem flexiblen Polyurethan gebildet ist.

17. Vorrichtung (1) nach einem der Ansprüche 8 bis 16, **dadurch gekennzeichnet, dass** das Tuch eine Dicke zwischen 0,5 mm bis 2,5 mm, vorzugsweise 1 mm bis 1,5 mm aufweist.

## Claims

1. Apparatus (1) for converting chemical energy into electrical energy and/or electrical energy into chemical energy, comprising a housing (2, 3, 3a), which is open on at least one side (6) and in which a pressure chamber (4) is formed, and comprising at least one electrochemically active cell (5) for transforming energy that extends from the open side (6) of the housing (2, 3, 3a) into the housing (2, 3, 3a), the open side (6) being closed by a plate (7, 31) that holds and/or supplies power to the cell (5), wherein a sealing element (8, 9) is arranged between the housing (2, 3, 3a) and the plate (7, 31), closes the open side (6) of the housing (2, 3, 3a) in a fluid- or gas-tight manner, thereby forming the pressure chamber (4), and is at least partially made of an elastic material, **characterized in that** the sealing element (8, 9) has at least one pocket (10), which extends into the pressure chamber (4) and in which the cell (5) is positioned, and the pocket wall (28) of which is flexible due to the elastic material, so that the pocket wall (28) bears against the cell (5) when there is overpressure in the pressure chamber (4).

2. Apparatus (1) according to Claim 1, **characterized in that** the sealing element (8, 9) is held at least in certain sections in its peripheral region (15) against end faces (14) of the housing (2, 3, 3a), in particular is fixed by at least one fasting means.

3. Apparatus (1) according to Claim 1 or 2, **characterized in that** it has a number of active cells (5) and a pocket (10) for each cell (5) is formed in the sealing element (8, 9).

4. Apparatus (1) according to Claim 3, **characterized in that** the active cells (5) are of a planar form and the pockets (10) lie parallel to one another.

5. Apparatus (1) according to one of the preceding claims, **characterized in that** the housing (2, 3, 3a) has two opposite open sides (6) that are respectively closed by a sealing element (8, 9) having at least one pocket (10), the pockets (10) respectively extending from one of the open sides (6) into the pressure chamber (4) and lying parallel next to one another.

6. Apparatus (1) according to one of the preceding claims, **characterized in that** the sealing element (8, 9) is formed by a moulding insert (8) that is substantially dimensionally stable.

7. Apparatus (1) according to one, of the preceding claims, **characterized in that** the inner dimensions of a pocket (10) are adapted to the geometrical outer dimensions of the cell (5).

8. Apparatus (1) according to one of Claims 1 to 5, **characterized in that** the sealing element (8, 9) is formed by a textile sheet and **in that** two opposite side walls (3, 3a) of the housing (2, 3, 3a) respectively have at least one elongated cutout (16) that opens towards the open side (6) of the housing (2, 3, 3a), the textile sheet (9) lying in a loop in the cutouts (16) so as to form a pocket (10).

9. Apparatus (1) according to Claim 8, **characterized in that** the textile sheet (9) is nonpositively fixed in the cutouts (16) by prongs (17) that correspond in their form to the elongated cutouts (16).

10. Apparatus (1) according to Claim 9, **characterized in that** the side walls (3, 3a) respectively have two or more cutouts (16), the prongs (17) that lie in the cutouts (16) of a side wall (3, 3a) being jointly held on a prong bar (18).

11. Apparatus (1) according to one of Claims 3 to 10, **characterized in that** the cells (5) have pole plates (19), the pole plates of two adjacent cells (5) that are directed towards one another being connected to one another by way of an electrical, mechanically stiff bridge (20).

12. Apparatus (1) according to Claim 11, **characterized in that** the bridge (20) is formed as one part with the pole plates (19).

13. Apparatus (1) according to Claim 11, **characterized in that** the bridge (20) is part of two lamellae that respectively extend into a pocket (10) and respectively bear against a pole plate (19) of two adjacent cells (5).

14. Apparatus (1) according to one of the preceding claims, **characterized in that** a spacer (22) lies on the bottom (21) of a pocket (10).

15. Apparatus (1) according to Claim 14, **characterized in that** the spacer (22) is an elongated moulding having two longitudinal grooves for receiving the edges of the pole plates (19) of a cell (5) or the edges of the lamellae.

16. Apparatus (1) according to one of the preceding claims, **characterized in that** the sealing element (8, 9) is formed from a silicone or a flexible polyurethane.

17. Apparatus (1) according to one of Claims 8 to 16, **characterized in that** the textile sheet has a thickness of between 0.5 mm and 2.5 mm, preferably 1 mm to 1.5 mm.

## Revendications

1. Dispositif (1) destiné à convertir de l'énergie chimique en énergie électrique et/ou de l'énergie électrique en énergie chimique, le dispositif présentant :
un boîtier (2, 3, 3a) ouvert en au moins un emplacement (6) et dans lequel une chambre sous pression (4) est formée et
au moins une cellule (5) électrochimiquement active assurant la conversion et s'étendant dans le boîtier (2, 3, 3a) depuis le côté ouvert (6) du boîtier (2, 3, 3a),
le côté ouvert (6) étant fermé par une plaque (7, 31) qui maintient et/ou alimente la cellule (5),
un élément d'étanchéité (8, 9) étant disposé entre le boîtier (2, 3, 3a) et la plaque (7, 31), fermant de manière étanche aux liquides et/ou de manière étanche aux gaz le côté ouvert (6) du boîtier (2, 3, 3a) en formant la chambre (4) sous pression et étant formé au moins en partie en un matériau élastique,
**caractérisé en ce que**
l'élément d'étanchéité (8, 9) présente au moins une poche (10) qui s'étend dans la chambre (4) sous pression, dans laquelle la cellule (5) repose et dont la paroi (28) formée par le matériau élastique est flexible, de telle sorte que la paroi (28) de la poche repose contre la cellule (5) lorsqu'une surpression règne dans la chambre (4) sous pression.

2. Dispositif (1) selon la revendication 1, **caractérisé en ce qu'**au moins certaines parties de la bordure (15) de l'élément d'étanchéité (8, 9) sont maintenues contre des côtés frontaux (14) du boîtier (2, 3, 3a) et y sont fixées en particulier par au moins un moyen de fixation.

3. Dispositif (1) selon les revendications 1 ou 2, **caractérisé en ce qu'**il présente plusieurs cellules actives (5) et **en ce qu'**une poche (10) est formée pour chaque cellule (5) dans l'élément d'étanchéité (8, 9).

4. Dispositif (1) selon la revendication 3, **caractérisé en ce que** les cellules (5) ont une configuration plane et **en ce que** les poches (10) sont parallèles les unes aux autres.

5. Dispositif (1) selon l'une des revendications précédentes, **caractérisé en ce que** le boîtier (2, 3, 3a) présente deux côtés ouverts (6) opposés qui sont chacun fermé par un élément d'étanchéité (8, 9) présentant au moins une poche (10), les poches (10) s'étendant chacune dans la chambre (4) sous pression depuis un des côtés ouverts (6) et étant situées parallèlement les unes aux autres.

6. Dispositif (1) selon l'une des revendications précédentes, **caractérisé en ce que** l'élément d'étanchéité (8, 9) est formé d'une garniture moulée (8) de forme essentiellement stable.

7. Dispositif (1) selon l'une des revendications précédentes, **caractérisé en ce que** les dimensions intérieures d'une poche (10) sont adaptées aux dimensions géométriques extérieures de la cellule (5).

8. Dispositif (1) selon l'une des revendications 1 à 5, **caractérisé en ce que** l'élément d'étanchéité (8, 9) est formé par une toile (9) et **en ce que** deux parois latérales (3, 3a) mutuellement opposées du boîtier (2, 3, 3a) présentent chacune au moins une découpe allongée (16) qui s'ouvre sur le côté ouvert (6) du boîtier (2, 3, 3a), la toile (9) reposant en boucle dans les découpes (16) pour former une poche (10).

9. Dispositif (1) selon la revendication 8, **caractérisé en ce que** la toile (9) est fixée en correspondance mécanique dans les découpes (16) par des dents (17) dont la forme correspond à celle des découpes allongées (16).

10. Dispositif (1) selon la revendication 9, **caractérisé en ce que** les parois latérales (3, 3a) présentent chacune deux ou plusieurs découpes (16), les dents (17) reposant dans les découpes (16) d'une paroi latérale (3, 3a) étant maintenues ensemble sur une latte dentée (18).

11. Dispositif (1) selon l'une des revendications 3 à 10, **caractérisé en ce que** les cellules (5) présentent des plaques polaires (19), les plaques polaires orientées l'une vers l'autre de deux cellules voisines (5) étant raccordées l'une à l'autre par un pont électrique (20) mécaniquement rigide.

12. Dispositif (1) selon la revendication 11, **caractérisé en ce que** le pont (20) est formé d'un seul tenant avec les plaques polaires (19).

13. Dispositif (1) selon la revendication 11, **caractérisé en ce que** le pont (20) fait partie de deux lamelles qui pénètrent chacune dans une poche (10) et qui reposent chacune sur une plaque polaire (19) de deux cellules voisines (5).

14. Dispositif (1) selon l'une des revendications précédentes, **caractérisé en ce qu'**un écarteur (22) est disposé au fond (21) d'une poche (10).

15. Dispositif (1) selon la revendication 14, **caractérisé en ce que** l'écarteur (22) est une pièce moulée allongée qui présente deux rainures longitudinales permettant de reprendre les bords des plaques polaires (19) d'une cellule (5) ou les bords des lamelles.

16. Dispositif (1) selon l'une des revendications précédentes, **caractérisé en ce que** l'élément d'étanchéité (8, 9) est réalisé en un silicone ou en un polyuréthane flexible.

17. Dispositif (1) selon l'une des revendications 8 à 16, **caractérisé en ce que** la toile présente une épaisseur comprise entre 0,5 mm et 2,5 mm et de préférence entre 1 mm et 1,5 mm.
